# EUROPÄISCHE PATENTSCHRIFT

(11) **EP 2 743 053 B1**
(45) Veröffentlichungstag und Bekanntmachung des Hinweises auf die Patenterteilung: **13.09.2017**
(21) Anmeldenummer: 13195231.9
(22) Anmeldetag: 02.12.2013
(51) Int. Cl.: B29C 45/14, B29K 705/00

(54) **Bauteilverbund und dessen Verwendung**
Composite component and its use
Composant composite et son utilisation

(30) Priorität: 11.12.2012 DE 102012222685
(43) Veröffentlichungstag der Anmeldung: 18.06.2014
(73) Patentinhaber: ROBERT BOSCH GMBH, 70442 Stuttgart (DE)
(72) Erfinder: Zewe, Philipp, 70176 Stuttgart (DE); Steinecke, Ulf, 71334 Waiblingen (DE); Honer, Michael, 70839 Gerlingen (DE); Lutz, Bernd, 87437 Kempten (DE); Hoerlein, Rainer Heinrich, 70376 Stuttgart (DE)

(56) Entgegenhaltungen:
- EP-A1- 2 298 525
- WO-A1-2012/071259
- DE-A1- 19 842 725
- DE-A1-102008 040 782
- JP-A- 2008 087 409
- US-A1- 2008 070 001

## Beschreibung

### Stand der Technik

Die Erfindung betrifft einen Bauteilverbund nach dem Oberbegriff des Anspruchs 1. Ferner betrifft die Erfindung die Verwendung eines erfindungsgemäßen Bauteilverbunds.

Ein Bauteilverbund nach dem Oberbegriff des Anspruchs 1 ist aus der DE 10 2008 040 782 A1 der Anmelderin bekannt. Der bekannte Bauteilverbund weist ein erstes Bauteil mit einer durch eine elektromagnetische Strahlung an einer ersten Kontaktfläche ausgebildeten Oberflächenstruktur auf, die eine von einer Nanostrukturierung überdeckte Mikrostrukturierung umfasst. Das erste Bauteil ist im Bereich der ersten Kontaktfläche in Wirkverbindung mit einer zweiten Kontaktfläche eines zweiten Bauteils angeordnet, das aus Kunststoff besteht, und das durch Anspritzen des zweiten Bauteils an das erste Bauteil gebildet wird. Darüber hinaus ist es aus der genannten Schrift bekannt, zwischen den beiden Bauteilen eine Formschlussverbindung auszubilden, wobei die Formschlussverbindung im dargestellten Ausführungsbeispiel durch Umspritzen eines Umfangsbundes, der am ersten Bauteil ausgebildet ist, erfolgt. Üblicherweise besteht das erste Bauteil aus Metall oder keramischem Werkstoff, so dass dessen Material einen geringeren Wärmeausdehnungskoeffizienten aufweist als das zweite Bauteil (Kunststoff). Dies hat zur Folge, dass bei einer Temperaturerhöhung, wie diese beispielsweise während des Betriebs eines Bauteilverbunds, wenn dieser Bestandteil eines Aggregats oder Ähnlichem ist, auftritt, es zu einer Schwächung der Formschlussverbindung und damit zu einer Beeinträchtigung der Dichtheit zwischen den beiden Bauteilen kommen kann. Wünschenswert ist hingegen eine Formschlussverbindung, deren Festigkeit über einen sehr großen Temperaturbereich relativ hoch ist.

Die US 2008/0070001 A1 offenbart ein Verfahren zur Herstellung einer Plastik-Metall-Hybrid-Komponente.

Aus der JP 2008 087409 ist Aluminiumgehäuse und ein Verfahren zu dessen Herstellung bekannt.

Die WO 2012/071259 A1 offenbart ein Verfahren zur Verbindung von Plastik mit Metall.

### Offenbarung der Erfindung

Ausgehend von dem dargestellten Stand der Technik liegt der Erfindung die Aufgabe zugrunde, einen Bauteilverbund nach dem Oberbegriff des Anspruchs 1 derart weiterzubilden, dass die zwischen den beiden Bauteilen ausgebildete Formschlussverbindung innerhalb eines relativ großen Temperaturbereichs eine hohe Verbindungsfestigkeit aufweist. Die hohe Festigkeit hat zur Folge, dass auch eine besonders gute Dichtigkeit zwischen den beiden Bauteilen erzielt werden kann. Diese Aufgabe wir erfindungsgemäß bei einem Bauteilverbund mit den Merkmalen des Anspruchs 1 dadurch gelöst, dass die Formschlussverbindung zwischen den beiden Bauteilen eine Kontur zwischen den beiden Bauteilen aufweist, die bei einer Temperaturerhöhung oder einer Temperaturerniedrigung aufgrund unterschiedlicher Wärmeausdehnungskoeffizienten der Materialien der beiden Bauteile zu einer erhöhten Flächenpressung zwischen den beiden Bauteilen führt. Mit anderen Worten gesagt bedeutet dies, dass durch eine entsprechend konstruktive Ausgestaltung der Formschlussverbindung zwischen den beiden Bauteilen im Ausgangszustand eine erste Flächenpressung bei einer bestimmten Ausgangstemperatur erzielt wird, und dass sich die Flächenpressung zwischen den beiden Bauteilen bei einer Temperaturerhöhung oder bei einer Temperaturerniedrigung gegenüber der Ausgangstemperatur erhöht. Dadurch wird der Einsatz des Bauteilverbunds in einem relativ großen Temperaturbereich ermöglicht, ohne dass zusätzliche Maßnahmen erforderlich sind, die die beiden Bauteile insbesondere bei relativ hohen oder tiefen Temperaturen miteinander verbindet.

Vorteilhafte Weiterbildungen des erfindungsgemäßen Bauteilverbunds sind in den Unteransprüchen aufgeführt.

In der erfindungsemäßen konstruktiven Ausgestaltung der Formschlussverbindung wird vorgeschlagen, dass die Kontur der Formschlussverbindung als Ausnehmung ausgebildet ist, dass das den größeren Wärmeausdehnungskoeffizienten aufweisende Bauteil die Ausnehmung zumindest bereichsweise ausfüllt, und dass das den größeren Wärmeausdehnungskoeffizienten aufweisende Bauteil an gegenüberliegenden Wandabschnitten der Ausnehmung anliegt. Insbesondere durch das zuletzt genannte Merkmal, dass das den größeren Wärmeausdehnungskoeffizienten aufweisende Bauteil an gegenüberliegenden Wandabschnitten der Ausnehmung anliegt, wird der Effekt erzielt, dass bei einer Temperaturerhöhung sich das innerhalb der Ausnehmung befindliche Bauteil stärker ausdehnt als das Bauteil, das die Ausnehmung ausbildet. Dadurch drückt das innerhalb der Ausnehmung angeordnete Bauteil an den gegenüberliegenden Wandabschnitten mit seinen entsprechenden Bauteilflächen gegen die Ausnehmung und erzielt bei einer Temperaturerhöhung eine vergrößerte Flächenpressung und somit eine festere Verbindung.

In besonders bevorzugter, weil fertigungstechnisch relativ einfach ausgestalteter Ausbildung der Ausnehmung ist es vorgesehen, dass die Ausnehmung in Form einer Vertiefung ausgebildet ist. Eine derartige Vertiefung kann beispielsweise in Form eines (zylindrischen) Loches, einer Aussparung, einer Nut oder Ähnlichem mittels konventioneller Werkzeuge relativ einfach erzeugt werden.

Um in unterschiedliche Richtungen den Effekt einer sich erhöhenden Flächenpressung zwischen den beiden Bauteilen zu erzielen, ist es bevorzugt vorgesehen, dass die Vertiefung einen umlaufenden Bereich aufweist, der die Wandabschnitte ausbildet.

Eine zusätzliche Erhöhung der Festigkeit zwischen den beiden Bauteilen wird erzielt, wenn die Kontur, die Teil der Formschlussverbindung ist, wenigstens einen Hinterschnitt aufweist.

Es ist darüber hinaus erfindungsgemäß vorgesehen, dass die Oberflächenstruktur in einem von dem Bereich der Formschlussverbindung getrennt angeordneten Bereich des ersten Bauteils ausgebildet ist. Es findet somit eine Trennung der beiden Funktionen "Dichtheit" und "Verbindung" bzw. Festigkeit statt, die es ermöglicht, dass der der Dichtheit dienende Bereich an den beiden Bauteilen, der insbesondere den Bereich der Oberflächenstruktur an dem ersten Bauteil umfasst, und der Bereich des Formschlussverbindung jeweils für sich optimiert werden kann.

Eine derartige örtliche Trennung der beiden Funktionen hat zur Folge, dass der Bereich der Oberflächenstruktur an dem ersten Bauteil hinsichtlich seiner abdichtenden Wirkung optimiert werden kann, so dass rein funktional der die Oberflächenstruktur aufweisende Bereich des ersten Bauteils keinerlei der Verbindung dienende Funktion übernehmen muss. Insbesondere ist es erfindungsgemäß vorgesehen, dass die Oberflächenstruktur eine Mikrostruktur mit Oberflächenelementen der Größe zwischen 1µm und 999µm aufweist, wobei die Oberflächenstruktur zusätzlich zur Mikrostruktur eine Nanostruktur mit Oberflächenelementen der Größe zwischen 1 nm und 999nm aufweist.

Ein bevorzugter Einsatz eines erfindungsgemäßen Bauteilverbunds besteht bei Kraftfahrzeuganwendungen, insbesondere bei Gehäusen, Ventilen oder elektrischen Verbindungselementen, wie Steckeranschlüssen. Derartige, bei Kraftfahrzeugen verwendete Bauteilverbunde sind oftmals dem Einfluss von zum Teil aggressiven Medien ausgesetzt und müssen darüber hinaus über einen großen Temperaturbereich zuverlässig arbeiten. Beides sind Kriterien, die zwischen den beiden Bauteilen eine hohe Dichtigkeit erfordern, die mittels des erfindungsgemäßen Bauteilverbunds vorteilhaft erfüllt werden können.

Weitere Vorteile, Merkmale und Einzelheiten der Erfindung ergeben sich aus der nachfolgenden Beschreibung bevorzugter Ausführungsbeispiele sowie anhand der Zeichnung.

Dies zeigt in:
- Fig. 1 bis Fig. 3: jeweils Längsschnitte durch unterschiedliche erfindungsgemäße Bauteilverbunde und
- Fig. 4: in Draufsicht eine Oberflächenstruktur, wie sie an einer ersten Kontaktfläche des ersten Bauteils ausgebildet ist, in vergrößerter Darstellung.

Gleiche Elemente bzw. Elemente mit gleicher Funktion sind in den Figuren mit den gleichen Bezugsziffern versehen.

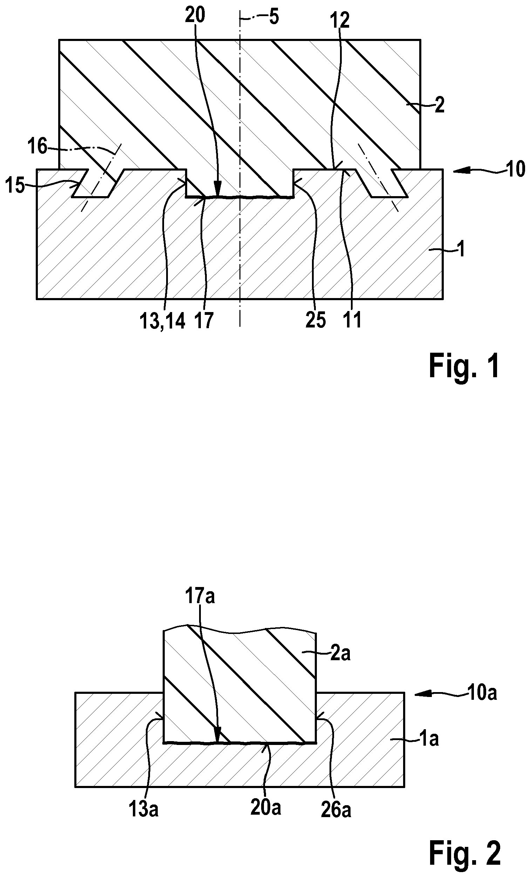

In der Fig. 1 ist ein erster erfindungsgemäßer Bauteilverbund 10 dargestellt, der zwei miteinander verbundene Bauteile 1, 2 umfasst. Das erste Bauteil 1 ist im dargestellten Ausführungsbeispiel als rotationssymmetrisches Bauteil 1 mit einer Längsachse 5 ausgebildet, es kann jedoch grundsätzlich beliebige Formen aufweisen. Das erste Bauteil 1 besteht vorzugsweise, jedoch nicht einschränkend, aus Metall, wie Stahl oder Aluminium. Das zweite Bauteil 2 besteht vorzugsweise aus Kunststoff (Thermoplast oder Duroplast) und ist durch Anspritzen mit dem ersten Bauteil 1 verbunden.

Das erste Bauteil 1 weist eine erste Kontaktoberfläche 11 auf, die in Wirkverbindung mit einer am zweiten Bauteil 2 ausgebildeten zweiten Kontaktoberfläche 12 steht. Das erste Bauteil 1 weist auf der dem zweiten Bauteil 2 zugewandten Stirnseite eine in der Längsachse 5 ausgebildete erste Ausnehmung 13 in Form einer zylindrischen Vertiefung 14 auf. Darüber hinaus ist am ersten Bauteil 1 in einem Radius zur Längsachse 5 eine radial umlaufende zweite Ausnehmung 15 ausgebildet. Die zweite Ausnehmung 15 weist beispielhaft eine Symmetrieachse 16 auf, die schräg zur Längsachse 5 des ersten Bauteils 1 angeordnet ist.

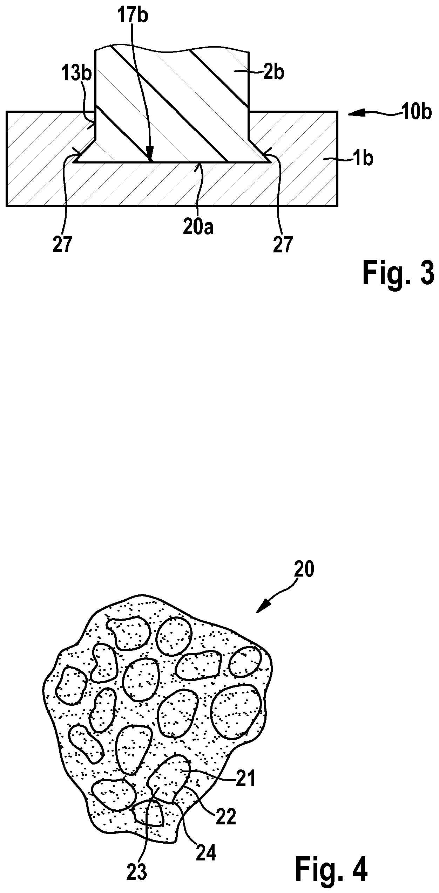

Die erste Kontaktoberfläche 11 weist im Bereich des Grunds 17 der zylindrischen Vertiefung 14 eine Oberflächenstruktur 20 auf. Vorzugsweise ist die Oberflächenstruktur 20 im Bereich der gesamten Fläche des Grunds 17 ausgebildet. Wie der Fig. 4 entnehmbar ist, weist die Oberflächenstruktur 20 eine Mikrostruktur 21 mit wulstigen und/oder vertieften Mikrostrukturelementen 22 auf. Die Mikrostrukturelemente 22 weisen eine Größe zwischen 1µm und 999µm auf. Die Mikrostrukturelemente 22 sind mit Nanostrukturelementen 23 und einer Nanostruktur 24 versehen, die sich auch im Bereich außerhalb der Mikrostrukturelemente 22 befindet. Die Größe der Nanostrukturelemente 23 beträgt zwischen 1 nm und 999nm. Durch die nano-/mikrostrukturierte Bauteiloberfläche an der ersten Kontaktoberfläche 11 wirken zwischen dem ersten Bauteil 1 und dem zweiten Bauteil 2 des Bauteileverbunds erhöhte Haftkräfte, die darüber hinaus auch eine Abdichtung zwischen den beiden Bauteilen 1, 2 im Bereich der ersten Kontaktoberfläche 11 bewirken.

Zum Herstellen der Oberflächenstruktur 20 wird die zunächst unstrukturierte erste Kontaktoberfläche 11 mittels eines gepulsten Laserstrahls bestrahlt. Dabei wird der Laserstrahl mittels eines Scannersystems derart abgelenkt, dass er den zu strukturierenden Bereich des ersten Bauteil 1 abrastert. Zum Erzeugen der ersten Oberflächenstruktur 20 kann dabei ein Femto-, Piko- oder Nanosekunden-Laser, vorzugsweise mit einer hohen Pulsfolgefrequenz, eingesetzt werden.

Es liegt auch im Rahmen der Erfindung, dass der Bauteileverbund 10 bzw. die Oberflächenstruktur 20 lediglich eine Mikrostruktur 21 mit Mikrostrukturelementen 22 aufweist, wenn dies hinsichtlich der Festigkeit und insbesondere bezüglich der Dichtigkeit für den Bauteilverbund 10 ausreichend ist.

Die erste Ausnehmung 13 und die zweite Ausnehmung 15 sind jeweils Teil einer Formschlussverbindung zwischen den beiden Bauteilen 1, 2. Dabei bewirkt die erste Ausnehmung 13, dass das zweite Bauteil 2 in einer Ebene senkrecht zur Längsachse 5 des ersten Bauteils 1 durch den Formschluss zwischen der ersten Ausnehmung 13 und dem in der ersten Ausnehmung 13 befindlichen Material des zweiten Bauteils 2 gehalten ist. Die (ringförmige) zweite Ausnehmung 15 bewirkt durch die zur Längsachse 5 schräg angeordnete Symmetrieachse 16 zusätzlich einen Formschluss in einer Richtung der Längsachse 5. Erfindungswesentlich ist, dass das zweite Bauteil 2, das aus Kunststoff besteht, einen größeren Wärmeausdehnungskoeffizienten aufweist als das erste Bauteil 1. Dadurch wird bewirkt, dass bei einer Temperaturerhöhung das Material des zweiten Bauteils 2 sich stärker ausdehnt als das Material des ersten Bauteils 1. Dadurch findet eine Festigkeitserhöhung der Formschlussverbindung statt, da bei einer Temperaturerhöhung das Material des zweiten Bauteils 2 an der die zylindrische Vertiefung 14 radial umgebenden Wand 25 mit einer erhöhten Flächenpressung anliegt. Diese erhöhte Flächenpressung bewirkt, dass das Material des zweiten Bauteils 2, das im Bereich der ersten Vertiefung 14 angeordnet ist, nicht zum Abheben von der ersten Kontaktoberfläche 11 neigt. Wesentlich ist darüber hinaus, dass die Oberflächenstruktur 20 hinsichtlich Ihrer Funktion den geforderten Dichtigkeitsanforderungen angepasst ist, während die Form bzw. die Ausgestaltung der beiden Ausnehmungen 13, 15 mit Hinblick auf eine Optimierung der Formschlussverbindung erfolgt.

In der Fig. 2 ist ein gegenüber der Fig. 1 modifizierter Bauteilverbund 10a dargestellt, bei dem das erste Bauteil 1a lediglich eine erste Ausnehmung 13 aufweist, die beispielsweise in Form einer senkrecht zur Zeichenebene verlaufenden Nut ausgebildet sein kann. Die erste Ausnehmung 13a bildet ebenfalls eine Formschlussverbindung auf, da das zweite Bauteil 2a seitlich in der ersten Ausnehmung 13a gehalten ist. Auch die erste Ausnehmung 13a weist lediglich am Grund 17a der ersten Ausnehmung 13a die Oberflächenstruktur 20a auf. Bei einer Temperaturerhöhung dehnt sich das zweite Bauteil 2a stärker aus als der Querschnitt der ersten Ausnehmung 13a, so dass das im Bereich des Wandabschnitts 26a befindliche Material des zweiten Bauteils 2a mit einer (gegenüber einer tieferen Temperatur) erhöhten Flächenpressung an dem Wandabschnitt 26a anliegt. Zusätzlich wird erwähnt, dass es auch möglich ist, einer Oberflächenstruktur 20a an dem Wandabschnitt 26a vorzusehen (nicht dargestellt).

Zuletzt ist in der Fig. 3 ein Bauteilverbund 10b dargestellt, der sich von dem Bauteilverbund 10a dadurch unterscheidet, dass im Bereich des Grunds 17b der ersten Ausnehmung 13b entlang der beiden Längsseiten jeweils ein Hinterschnitt 27 ausgebildet ist, der eine Formschlussverbindung senkrecht zum Grund 17b bildet.

Die soweit beschriebenen Bauteilverbunde 10, 10a und 10b können wie nachfolgend beschrieben in vielfältiger Art abgewandelt, bzw. modifiziert werden. Insbesondere können die ersten Ausnehmungen 13a, 13b bei den Bauteilverbunden 10a, 10b, in Analogie zum Bauteilverbund 10 rotationssymmetrisch ausgebildet sein. So wird ergänzend erläutert, dass die dargestellten Bauteilverbunde 10, 10a und 10b derart ausgebildet sind, dass bei einer Temperaturerhöhung eine Erhöhung der Festigkeit zwischen den beiden Bauteilen 1, 1a, 2, 2a erzielt wird. Für den Fall, dass bei einer Temperaturerniedrigung eine erhöhte Festigkeit erzielt werden soll, so kann es vorgesehen sein, dass das aus Metall bestehende Bauteil 1, 1a einen Steg, Vorsprung o.ä. aufweist, der von dem Kunststoff des zweiten Bauteils 2, 2a umspritzt ist. Auch kann eine Kombination beider Verbindungen vorgesehen sein, so dass es erste Bereiche gibt, die im Falle einer Temperaturerniedrigung die Verbindungsfestigkeit des Bauteilverbund 10, 10a und 10b erhöhen, und zweite Bereiche, die im Falle einer Temperaturerhöhung die Verbindungsfestigkeit des Bauteilverbund 10, 10a und 10b erhöhen. Wesentlich bei allen Bauteilverbunden 10, 10a und 10b ist es, dass die Funktionen Abdichten und Halten (über die Formschlussverbindungen) der beiden Bauteile 1, 1a, 2, 2a örtlich getrennt sind.

## Patentansprüche

1. Bauteilverbund (10; 10a; 10b), mit einem ersten Bauteil (1; 1a), das an einer ersten Kontaktfläche (11) zumindest bereichsweise eine durch eine elektromagnetische Strahlung, insbesondere einen Laserstrahl erzeugte Oberflächenstruktur (20; 20a) aufweist, einem zweiten Bauteil (2; 2a) mit einer mit der ersten Kontaktfläche (11) zusammenwirkenden zweiten Kontaktfläche (12), wobei das zweite Bauteil (2; 2a) aus Kunststoff besteht und durch Anspritzen an das erste Bauteil (1; 1a) ausgebildet ist, und mit einer zwischen den beiden Bauteilen (1; 1a, 2; 2a) ausgebildeten Formschlussverbindung,
wobei die Formschlussverbindung eine Kontur zwischen den beiden Bauteilen (1; 1a, 2; 2a) aufweist, die bei einer Temperaturerhöhung oder einer Temperaturerniedrigung aufgrund unterschiedlicher Wärmeausdehnungskoeffizienten der Materialien der beiden Bauteile (1; 1a, 2; 2a) zu einer erhöhten Flächenpressung zwischen den beiden Bauteilen (1; 1a, 2; 2a) führt,
wobei die Oberflächenstruktur (20; 20a) zumindest eine Mikrostruktur (21) mit Oberflächenelementen (22) der Größe zwischen 1µm und 999µm aufweist,
wobei die Oberflächenstruktur (20; 20a) zusätzlich eine Nanostruktur (24) mit Oberflächenelementen (23) der Größe zwischen 1 nm und 999nm aufweist,
**dadurch gekennzeichnet, dass**
die Kontur als Ausnehmung (13; 13a; 13b; 15) ausgebildet ist, dass das den größeren Wärmeausdehnungskoeffizienten aufweisende Bauteil (2; 2a) die Ausnehmung (13; 13a; 13b; 15) zumindest bereichsweise ausfüllt, und dass das den größeren Wärmeausdehnungskoeffizienten aufweisende Bauteil (2; 2a) an gegenüberliegenden Wandabschnitten (25; 26a) der Ausnehmung (13; 13a; 13b; 15) anliegt, und
dass die Oberflächenstruktur (20; 20a) in einem von dem Bereich der Formschlussverbindung getrennt angeordneten Bereich des ersten Bauteils (1; 1a) ausgebildet ist.

2. Bauteilverbund nach Anspruch 1,
**dadurch gekennzeichnet,**
**dass** die Ausnehmung (13; 13a; 13b) in Form einer Vertiefung (14) ausgebildet ist.

3. Bauteilverbund nach Anspruch 2,
**dadurch gekennzeichnet,**
**dass** die Vertiefung (14) einen radial umlaufenden Bereich aufweist, der die Wandabschnitte (25; 26a) ausbildet.

4. Bauteilverbund nach einem der Ansprüche 1 bis 3,
**dadurch gekennzeichnet,**
**dass** die Kontur wenigstens einen Hinterschnitt (27) aufweist.

5. Bauteilverbund nach einem der Ansprüche 1 bis 4,
**dadurch gekennzeichnet,**
**dass** das erste Bauteil (1; 1) aus Metall besteht.

6. Verwendung eines Bauteilverbunds (10; 10a; 10b) nach einem der Ansprüche 1 bis 5 bei Kraftfahrzeuganwendungen, insbesondere bei Gehäusen, Ventilen oder elektrischen Verbindungselementen, wie Steckeranschlüssen.

## Claims

1. Composite component (10; 10a; 10b) comprising a first component (1; 1a), which has at least in certain regions on a first contact area (11) a surface structure (20;. 20a) produced by an electromagnetic radiation, in particular a laser beam, a second component (2; 2a) with a second contact area (12) interacting with the first contact area (11), the second component (2; 2a) consisting of plastic and being formed by being moulded onto the first component (1; 1a), and comprising an interlocking connection formed between the two components (1; 1a, 2; 2a),
the interlocking connection having a contour between the two components (1; 1a, 2; 2a), which as a result of different coefficients of thermal expansion of the materials of the two components (1; 1a, 2; 2a) leads to an increased surface pressure between the two components (1; 1a, 2; 2a) when there is an increase in temperature or a decrease in temperature,
the surface structure (20; 20a) having at least one microstructure (21) with surface elements (22) of the size between 1 µm and 999 µm,
the surface structure (20; 20a) additionally having a nanostructure (24) with surface elements (23) of the size between 1 nm and 999 nm,
**characterized in that**
the contour is formed as a recess (13; 13a; 13b; 15), **in that** the component (2; 2a) having the greater coefficient of thermal expansion fills the recess (13; 13a; 13b; 15), at least in certain regions, and **in that** the component (2; 2a) having the greater coefficient of thermal expansion lies against opposing wall portions (25; 26a) of the recess (13; 13a; 13b; 15), and
**in that** the surface structure (20; 20a) is formed in a region of the first component (1; 1a) that is separate from the region of the interlocking connection.

2. Composite component according to Claim 1,
**characterized**
**in that** the recess (13; 13a; 13b) takes the form of a depression (14).

3. Composite component according to Claim 2,
**characterized**
**in that** the depression (14) has a radially peripheral region, which forms the wall portions (25; 26a).

4. Composite component according to one of Claims 1 to 4,
**characterized**
**in that** the contour has at least one undercut (27).

5. Composite component according to one of Claims 1 to 4,
**characterized**
**in that** the first component (1; 1) consists of metal.

6. Use of a composite component (10; 10a; 10b) according to one of Claims 1 to 5 for motor vehicle applications, in particular for housings, valves or electrical connecting elements, such as plug connections.

## Revendications

1. Composant composite (10; 10a; 10b) présentant une première partie (1; 1a) qui présente au moins sur certaines parties d'une première surface de contact (11) une structure de surface (20; 20a) formée par un rayonnement électromagnétique et en particulier un faisceau laser, une deuxième partie (2; 2a) dotée d'une deuxième surface de contact (12) qui coopère avec la première surface de contact (11), la deuxième partie (2; 2a) étant réalisée en matière synthétique et formée par projection sur la première partie (1; 1a), et une liaison en correspondance géométrique formée entre les deux parties (1; 1a, 2; 2a),
la liaison en correspondance géométrique présentant un contour entre les deux parties (1; 1a, 2; 2a) qui, lors d'une augmentation de température ou d'une diminution de la température, entraîne suite à des différences de coefficient de dilatation thermique de matériau des deux parties (1; 1a, 2; 2a) une augmentation de la poussée de surface entre les deux parties (1; 1a, 2; 2a),
la structure de surface (20; 20a) présentant au moins une microstructure (21) dotée d'éléments de surface (22) dont la taille est comprise entre 1 µm et 999 µm,
la structure de surface (20; 20a) présentant de plus une nanostructure (24) dotée d'élément de surface (23) dont la taille est comprise entre 1 nm et 999 nm, **caractérisé en ce que**
le contour est configuré comme découpe (13; 13a; 13b; 15), **en ce que** la partie (2; 2a) présentant le plus grand coefficient de dilatation thermique remplit au moins certaines parties de la découpe (13; 13a; 13b; 15), **en ce que** la partie (2; 2a) qui présente le plus grand coefficient de dilatation thermique repose sur des parties opposées (25; 26a) de la paroi de la découpe (13; 13a; 13b; 15) et
**en ce que** la structure de surface (20; 20a) est formée dans une partie de la première partie (1; 1a) séparée de la partie qui assure la liaison en correspondance géométrique.

2. Composant composite selon la revendication 1, **caractérisé en ce que** la découpe (13; 13a; 13b) est configurée en creux (14).

3. Composant composite selon la revendication 2, **caractérisé en ce que** le creux (14) présente une partie périphérique radiale qui forme les sections de paroi (25; 26a).

4. Composant composite selon l'une des revendications 1 à 3, **caractérisé en ce que** le contour présente au moins une contre-dépouille (27).

5. Composant composite selon l'une des revendications 1 à 4, **caractérisé en ce que** la première partie (1; 1) est réalisée en métal.

6. Utilisation du composant composite (10; 10a; lOb) selon l'une des revendications 1 à 5 dans des applications sur véhicule automobile, en particulier sur des boîtiers, des soupapes ou des éléments de raccordement électrique, par exemple des raccordements à fiche.
